# EUROPÄISCHE PATENTSCHRIFT

(11) **EP 3 982 509 B1**
(45) Veröffentlichungstag und Bekanntmachung des Hinweises auf die Patenterteilung: **26.03.2025**
(21) Anmeldenummer: 21201918.6
(22) Anmeldetag: 11.10.2021
(51) Int. Cl.: H02J 7/00, H05K 7/20

(54) **EIN AUS ZUMINDEST EINER LADEEINRICHTUNG UND EINEM AKKUMULATOR GEBILDETES SYSTEM UND VERFAHREN ZUR TEMPERIERUNG EINES AKKUMULATORS**
SYSTEM AND METHOD FOR CONTROLLING THE TEMPERATURE OF A BATTERY COMPRISING AT LEAST ONE CHARGING DEVICE AND A BATTERY
SYSTÈME FORMÉ À PARTIR D'AU MOINS UN DISPOSITIF DE CHARGE ET D'UN ACCUMULATEUR ET PROCÉDÉ DE MISE EN TEMPÉRATURE D'UN ACCUMULATEUR

(30) Priorität: 12.10.2020 DE 102020126740
(43) Veröffentlichungstag der Anmeldung: 13.04.2022
(73) Patentinhaber: Einhell Germany AG, 94405 Landau / Isar (DE)
(72) Erfinder: Dr. THANNHUBER, Markus, 94405 Landau (DE)
(74) Vertreter: Hofstetter, Schurack & Partner

(56) Entgegenhaltungen:
- WO-A1-2014/065255
- US-A- 5 490 572
- US-A1- 2009 167 253
- US-A1- 2015 280 292
- US-A1- 2016 093 933

## Beschreibung

Die vorliegende Erfindung betrifft ein aus zumindest einer Ladeeinrichtung und einem Akkumulator gebildetes System zum Temperieren des Akkumulators und ein Verfahren zur Temperierung eines Akkumulators mit den Merkmalen der unabhängigen Ansprüche

Das Laden eines Akkumulators ist sehr stark von der Temperatur abhängig. So lässt sich ein Akkumulator bspw. bei einer Umgebungstemperatur von weniger als 20 Grad Celsius verhältnismäßig langsam, und weniger als 10 Grad Celsius nur sehr langsam laden. Unterhalb von 0 Grad Celsius unterbindet üblicherweise das Batteriemanagementsystem (BMS) das Laden des Akkumulators. Beim Laden eines Akkumulators bei niedrigen Temperaturen besteht letztendlich die Gefahr eines internen Kurzschlusses einer Akkumulatorzelle. Zudem altern die Akkumulatorzellen erheblich. Um diese Probleme zu beseitigen, ist es im Stand der Technik bereits bekannt, den Akkumulator, insbesondere dessen Akkumulatorzellen, zeitlich vor und/oder während des Ladens auf eine bestimmte Temperatur zu erwärmen. Die Erwärmung der Zellen kann bspw. durch integrierte Heizelemente bzw. einer elektrischen Widerstandsheizung oder dergleichen erfolgen. Jedoch hat es sich hier als nachteilig erwiesen, dass allein durch solche Heizelemente die gewünschten Temperaturen nur schwer erreicht bzw. gehalten werden.

Bei einer zu hohen Umgebungstemperatur und/oder zu hohen Akkumulatoroberflächentemperatur und/oder Akkumulatorzelltemperatur besteht das Problem, dass die Akkumulatorzellen überhitzen, so dass es daher zwingend notwendig ist, die Wärme abzuführen und/oder die Akkumulatoren zu kühlen. Im Stand der Technik ist es bspw. bekannt, einen an eine Ladeeinrichtung gekoppelten Akkumulator zeitlich vor und/oder während des Ladens zu abzukühlen. Bspw. ist durch die DE 100 66 410 B4 eine Ladeeinrichtung offenbart, welche mit einem Gebläse ausgestattet ist. Das Gebläse kann einen Luftvolumenstrom erzeugen, welcher durch den Akkumulator geblasen wird. Über den Luftvolumenstrom können folglich die Akkumulatorzellen bzw. der Akkumulator gekühlt werden. Damit der Luftvolumenstrom in das Innere des Akkumulators geblasen werden kann, bedarf es im Gehäuse des Akkumulators entsprechende Lufteintritts- und Luftaustrittsöffnungen. Gelangt jedoch über eine solche Öffnung Feuchtigkeit, Staub oder sonstige Partikel in das Innere des Akkumulators, so besteht die Gefahr eines Kurzschlusses. Aufgrund eintretender Feuchtigkeit können die Komponenten des Akkumulators auch sehr schnell korrodieren.

Aus der US 2015/0280292 A1 bzw. der WO 2014/065255 A1 ist eine Temperiervorrichtung für eine Batterie bekannt. Dabei ist eine Gebläseeinrichtung gemeinsam mit einer zu temperierenden Batterie und einem Wärmetauscher in einem Gehäuse angeordnet.

Der vorliegenden Erfindung liegt daher die Aufgabe zugrunde ein aus zumindest einer Ladeeinrichtung und einem Akkumulator gebildetes System zur Verfügung sowie ein Verfahren zur Temperierung eines Akkumulators zu stellen, mittels welchem der Akkumulator schnell und ohne großen Aufwand zeitlich vor oder während des Ladens auf eine ideale Temperatur temperiert werden kann.

Die genannte Aufgabe wird gelöst durch ein aus zumindest einer Ladeeinrichtung und einem Akkumulator gebildetes System zum temperierten Laden des Akkumulators und ein Verfahren zur Temperierung eines Akkumulators mit den Merkmalen der unabhängigen Ansprüche. Weitere vorteilhafte Ausgestaltungen und Weiterbildungen der Erfindung sind in den jeweils abhängigen Ansprüchen angegeben.

Die Erfindung betrifft ein aus zumindest einer Ladeeinrichtung und einem Akkumulator gebildetes System zur Temperierung des Akkumulators zeitlich vor oder während des Ladens. Die Ladeeinrichtung umfasst ein Ladeeinrichtungsgehäuse mit zumindest einer Akkumulator-Schnittstelle, an welcher der zumindest eine Akkumulator mechanisch koppelbar ist bzw. gekoppelt ist.

Innerhalb des Ladeeinrichtungsgehäuses ist eine Gebläseeinrichtung angeordnet, welche dazu eingerichtet ist, einen Luftvolumenstrom zu erzeugen.

Das System, insbesondere die Ladeeinrichtung und/oder der Akkumulator, umfasst weiter wenigstens eine Sensoreinrichtung, welche dazu eingerichtet ist, eine Ist-Akkumulatoroberflächentemperatur und/oder Ist-Akkumulatorzelltemperatur zu messen und/oder erfassen.

Das System, insbesondere die Ladeeinrichtung, umfasst weiter wenigstens ein Temperierelement zur Temperierung des von der Gebläseeinrichtung erzeugten Luftvolumenstroms auf eine definierte Temperatur, wobei das wenigstens eine Temperierelement der Gebläseeinrichtung strömungstechnisch nachgeordnet und/oder nachgeschaltet ist, so dass insbesondere ein temperierter Luftvolumenstrom gebildet wird. Der temperierte Luftvolumenstrom ist auf den Akkumulator gerichtet, so dass eine Außenfläche des Akkumulators vom temperierten Luftvolumenstrom umströmbar ist bzw. umströmt wird.

Das System, insbesondere die Ladeeinrichtung, umfasst weiter wenigstens eine mit der wenigstens einen Sensoreinrichtung in Verbindung stehende bzw. kommunizierende Steuer- und/oder Regeleinrichtung. Die Steuer- und/oder Regeleinrichtung ist dazu eingerichtet, die Ist-Akkumulatoroberflächentemperatur und/oder Ist-Akkumulatorzelltemperatur mit einer Soll-Akkumulatoroberflächentemperatur und/oder Soll-Akkumulatorzelltemperatur zu vergleichen.

In Abhängigkeit vom Soll-Ist-Vergleich der Akkumulatoroberflächentemperatur und/oder der Akkumulatorzelltemperatur derart angesteuert wird das Temperierelement derartig angesteuert, so dass der Akkumulator durch das Anblasen mittels des temperierten Luftvolumenstroms eine Soll-Akkumulatoroberflächentemperatur und/oder Soll-Akkumulatorzelltemperatur erreicht.

Das Ladeeinrichtungsgehäuse weist zumindest eine oder mehrere Öffnungen auf, über welche die Gebläseeinrichtung, insbesondere fluidisch, mit der Umgebung verbunden ist. Die eine oder die mehreren Öffnungen können rund, oval, eckig oder dergleichen gebildet sein. Auch kann es denkbar sein, dass die ein oder mehreren Öffnungen schlitzartig gebildet sind.

Außerdem umfasst das Ladeeinrichtungsgehäuse zumindest eine oder mehrere Luftaustrittsöffnungen, über welche der von der Gebläseeinrichtung erzeugte Luftvolumenstrom aus dem Ladeeinrichtungsgehäuse austritt, um den Akkumulator mit dem temperierten Luftvolumenstrom anzublasen.

Die erfasste Ist-Akkumulatoroberflächentemperatur und/oder Ist-Akkumulatorzelltemperatur des Akkumulators kann unterhalb oder oberhalb der Soll-Akkumulatoroberflächentemperatur und/oder Soll-Akkumulatorzelltemperatur liegen, d.h. die Ist-Akkumulatoroberflächentemperatur und/oder Ist-Akkumulatorzelltemperatur kann "zu kalt" oder "zu warm" sein, so dass der Akkumulator nicht optimal geladen werden kann.

Durch den temperierten Luftvolumenstrom kann der Akkumulator vorteilhafterweise zeitlich vor oder während des Ladens erwärmt oder gekühlt werden. Da der Akkumulator, insbesondere dessen Akkumulatorzellen, durch das vorliegende System somit stets auf eine definierte Temperatur temperiert werden kann, erfolgt das Laden des Akkumulators im optimalen Temperaturbereich. Da somit eine Überhitzung oder eine Unterkühlung des Akkumulators verhindert wird, können der Akkumulator, insbesondere dessen Akkumulatorzellen, vorteilhafterweise eine längere Lebensdauer haben. Auch kann das Laden des Akkumulators schneller durchgeführt werden.

Gemäß einem Ausführungsbeispiel kann der temperierte Luftvolumenstrom durch einen warmen bzw. erwärmten Luftvolumenstrom gebildet sein. Demnach kann bei Unterschreiten der Soll-Akkumulatoroberflächentemperatur und/oder Soll-Akkumulatorzelltemperatur durch den temperierten Luftvolumenstrom vorteilhafterweise zeitlich vor oder während des Ladens erwärmt werden. Aufgrund dessen kann eine Unterkühlung des Akkumulators verhindert werden.

Gemäß einem weiteren Ausführungsbeispiel kann der temperierte Luftvolumenstrom durch einen kühlen bzw. gekühlten Luftvolumenstrom gebildet sein. Demnach kann bei Überschreiten der Soll-Akkumulatoroberflächentemperatur und/oder Soll-Akkumulatorzelltemperatur durch den temperierten Luftvolumenstrom vorteilhafterweise zeitlich vor oder während des Ladens gekühlt werden. Aufgrund dessen kann eine Unterkühlung des Akkumulators verhindert werden.

Gemäß einem weiteren Ausführungsbeispiel kann der temperierte Luftvolumenstrom wahlweise durch einen warmen bzw. erwärmten oder einen kalten bzw. gekühlten Luftvolumenstrom gebildet sein, d.h. je nach Über- oder Unterschreiten der Soll-Akkumulatoroberflächentemperatur und/oder Soll-Akkumulatorzelltemperatur kann durch das System ein entsprechend temperierter Luftvolumenstrom bereitgestellt werden, um somit die Ist-Akkumulatoroberflächentemperatur und/oder Ist-Akkumulatorzelltemperatur an die Soll-Akkumulatoroberflächentemperatur und/oder Soll-Akkumulatorzelltemperatur anzupassen.

Weiterhin kann die Steuer-und/oder Regeleinrichtung die Gebläseeinrichtung derart ansteuern, so dass der durch die Gebläseeinrichtung erzeugte Luftvolumenstrom in seinem Volumen und/oder Geschwindigkeit variiert, insbesondere erhöht oder reduziert, werden kann.

Bei dem vorliegenden System kann es somit möglich sein, dass bei einer zu niedrigen Ist-Akkumulatorzelltemperatur und/oder Ist-Akkumulatoroberflächentemperatur der Luftvolumenstrom kurzzeitig erhöht werden, so dass der Akkumulator durch den temperierten und zugleich erhöhten Luftvolumenstrom schnell bzw. zügig auf eine Soll-Akkumulatoroberflächentemperatur und/oder Soll-Akkumulatorzelltemperatur erwärmt werden kann. Eine derartige Erhöhung des Luftvolumenstroms kann zumindest solange andauern, bis die Soll-Akkumulatoroberflächentemperatur und/oder Soll-Akkumulatorzelltemperatur zumindest näherungsweise erreicht ist oder vollständig erreicht ist.

Alternativ oder zusätzlich kann es bei dem vorliegenden System auch möglich sein, dass bei einer zu hohen Ist-Akkumulatorzelltemperatur und/oder Ist-Akkumulatoroberflächentemperatur der Luftvolumenstrom kurzzeitig erhöht werden kann, so dass der Akkumulator durch den temperierten und zugleich erhöhten Luftvolumenstrom stark bzw. schnell auf eine Soll-Akkumulatoroberflächentemperatur und/oder Soll-Akkumulatorzelltemperatur abgekühlt werden kann.

Ist die Soll-Akkumulatoroberflächentemperatur und/oder Soll-Akkumulatorzelltemperatur zumindest näherungsweise erreicht oder vollständig erreicht, dann kann die Gebläseeinrichtung durch die Steuer- und/oder Regeleinrichtung derart angesteuert werden, so dass diese einen reduzierten Luftvolumenstrom abgibt, welcher dazu dient, die Ist-Akkumulatorzelltemperatur und/oder Ist-Akkumulatoroberflächentemperatur des Akkumulators zu halten und/oder zu stabilisieren. Durch eine entsprechende Ansteuerung der Gebläseeinrichtung mittels der Steuer- und/oder Regeleinrichtung kann der Luftvolumenstrom bei Bedarf wieder erhöht werden.

Sofern die Ist-Akkumulatorzelltemperatur und/oder Ist-Akkumulatoroberflächentemperatur von der Soll-Akkumulatoroberflächentemperatur und/oder Soll-Akkumulatorzelltemperatur nur geringfügig abweicht, dann kann es auch denkbar sein, dass die Gebläseeinrichtung lediglich einen reduzierten Luftvolumenstrom abgibt und/oder erzeugt, um die Soll-Akkumulatorzelltemperatur und/oder Soll-Akkumulatoroberflächentemperatur des Akkumulators zu erreichen bzw. zu halten und/oder zu stabilisieren.

Ein solcher variierbarer Luftvolumenstrom kann insofern dahingehend vorteilhaft sein, da dieser in Abhängigkeit von der jeweiligen Ist-Akkumulatorzelltemperatur und/oder Ist-Akkumulatoroberflächentemperatur bzw. Soll-Akkumulatoroberflächentemperatur und/oder Soll-Akkumulatorzelltemperatur beliebig eingestellt werden kann. In Kombination mit dem wenigstens einen Temperierelement kann der temperierte und zugleich variierbare Luftvolumenstrom optimal zur Temperierung des Akkumulators auf Soll-Akkumulatorzelltemperatur und/oder Soll-Akkumulatoroberflächentemperatur beitragen.

Gemäß einem Ausführungsbeispiel kann es denkbar sein, dass die wenigstens eine Sensoreinrichtung innerhalb des Akkumulators angeordnet ist, so dass dessen Ist-Akkumulatorzelltemperatur gemessen und/oder erfasst werden kann.

Alternativ kann es gemäß einem Ausführungsbeispiel denkbar sein, dass die wenigstens eine Sensoreinrichtung derart an der Ladeeinrichtung angeordnet ist, so dass eine Ist-Akkumulatoroberflächentemperatur des Akkumulators gemessen und/oder erfasst werden kann. Die wenigstens eine Sensoreinrichtung kann durch einen Temperatursensor oder dergleichen gebildet sein.

Gemäß einem weiteren Ausführungsbeispiel kann auch eine Kombination denkbar sein, wonach die wenigstens eine Sensoreinrichtung innerhalb des Akkumulators und an der Ladeeinrichtung angeordnet ist, so dass die Ist-Akkumulatorzelltemperatur und die Ist-Akkumulatoroberflächentemperatur des Akkumulators gemessen und/oder erfasst werden.

Weiter kann vorgesehen sein, dass zwischen der wenigstens einen Sensoreinrichtung und der Steuer- und/oder Regeleinrichtung eine drahtlose Verbindung vorgesehen ist. Hierfür eignen sich bspw. Funk, Bluetooth, Wifi oder dergleichen. Alternativ kann die wenigstens eine Sensoreinrichtung mit der Steuer- und/oder Regeleinrichtung elektrisch verbunden sein, welche durch eine oder mehrere Leitungen oder dergleichen gebildet ist.

Weiter kann vorgesehen sein, dass der Akkumulator derart an der zumindest einen Akkumulator-Schnittstelle gekoppelt ist, so dass eine Flachseite und/oder Längsseite des Akkumulators durch den temperierten Luftvolumenstrom angeblasen wird. Der temperierte Luftvolumenstrom kann somit entlang der Flachseite und/oder Längsseite des Akkumulators strömen und den Akkumulator auf diese Weise von außen auf eine gewünschte Soll-Akkumulatorzelltemperatur und/oder Soll-Akkumulatoroberflächentemperatur temperieren, insbesondere erwärmen oder kühlen.

Das Anblasen des Akkumulators an seiner Flachseite kann deshalb vorteilhaft sein, da der Luftvolumenstrom entlang einer größeren Fläche strömt, was somit auch eine gleichmäßigere und schnellere Temperierung des Akkumulators bewirkt. Wenn nachfolgend von "Flachseite" die Rede ist, so kann insbesondere diejenige Seite des Akkumulators gemeint sein, welche gegenüberliegend zu der mit der Akkumulator-Schnittstelle gebildeten Flachseite des Akkumulators ist.

Gemäß einem Ausführungsbeispiel kann vorgesehen sein, dass der Luftvolumenstrom zum Erwärmen des Akkumulators durch das wenigstens eine Temperierelement auf eine Temperatur zwischen ca. 30 Grad Celsius und ca. 75 Grad Celsius temperierbar, insbesondere erwärmbar ist. Über einen derartigen erwärmten bzw. warmen Luftvolumenstrom kann der Akkumulator auf eine Soll-Akkumulatoroberflächentemperatur und/oder Soll-Akkumulatorzelltemperatur erwärmt werden, indem der Akkumulator insbesondere an seiner Außenseite, insbesondere Flachseite, mit dem erwärmten bzw. warmen Luftvolumenstrom angeblasen wird. Ein Erwärmen des Akkumulators kann insbesondere bei niedrigen Umgebungstemperaturen, niedrigen Oberflächentemperaturen und/oder niedrigen Zelltemperaturen erforderlich sein, um den Akkumulator zuverlässig laden zu können.

Gemäß einem weiteren Ausführungsbeispiel kann alternativ oder zusätzlich vorgesehen sein, dass der Luftvolumenstrom zum Kühlen des Akkumulators durch das wenigstens eine Temperierelement auf eine Temperatur zwischen ca.0 Grad Celsius und ca. 29 Grad Celsius temperierbar, insbesondere kühlbar ist. Über einen derartigen gekühlten bzw. kalten Luftvolumenstrom kann der Akkumulator auf eine Soll-Akkumulatoroberflächentemperatur und/oder Soll-Akkumulatorzelltemperatur gekühlt werden, indem der Akkumulator insbesondere an seiner Außenseite, mit dem gekühlten bzw. kalten Luftvolumenstrom angeblasen wird. Ein Kühlen des Akkumulators kann bspw. dann erforderlich sein, um ein Überhitzen des Akkumulators bspw. während des Ladens zu verhindern und/oder um den Akkumulator zeitlich vor dem Laden abzukühlen.

Weiterhin kann vorgesehen sein, dass die Steuer- und/oder Regeleinrichtung bei Erreichen der Soll-Akkumulatoroberflächentemperatur und/oder Soll-Akkumulatorzelltemperatur dazu eingerichtet ist, die Temperierung des Luftvolumenstroms kurzzeitig zu unterbrechen und/oder zu reduzieren oder die Gebläseeinrichtung und/oder das Temperierelement kurzzeitig auszuschalten. Weicht die Ist-Akkumulatoroberflächentemperatur und/oder Ist-Akkumulatorzelltemperatur von der Soll-Akkumulatoroberflächentemperatur und/oder Soll-Akkumulatorzelltemperatur ab, dann kann die Steuer- und/oder Regeleinrichtung dazu eingerichtet sein, die Gebläseeinrichtung und/oder das Temperierelement wieder zu aktivieren und/oder den Luftvolumenstrom wieder zu temperieren, so dass die Soll-Akkumulatoroberflächentemperatur und/oder Soll-Akkumulatorzelltemperatur wieder erreicht wird.

Darüber hinaus kann vorgesehen sein, dass der Steuer- und/oder Regeleinrichtung eine Auswerteeinheit zugeordnet ist bzw. dass in die Steuer- und/oder Regeleinrichtung eine Auswerte- und/oder Recheneinheit integriert ist. Die Auswerte- und/oder Recheneinheit ist dazu ausgebildet, einen Soll-/Ist-Vergleich der Akkumulatoroberflächentemperatur und/oder der Akkumulatorzelltemperatur durchzuführen, wobei das Ergebnis der Steuer- und/oder Regeleinrichtung zur Verfügung gestellt wird.

Weiter kann vorgesehen sein, dass das wenigstens eine Temperierelement durch ein Heizelement oder dergleichen gebildet ist. Das Heizelement kann bspw. durch eine Heizwendel gebildet sein, mittels welcher es möglich ist, den durch die Gebläseeinrichtung erzeugten Luftvolumenstrom auf eine definierte Temperatur zu erwärmen. Alternativ kann das wenigstens eine Temperierelement durch ein Peltierelement gebildet sein. Durch das Peltierelement kann es vorteilhaftweise möglich sein, den durch die Gebläseeinrichtung erzeugten Luftvolumenstrom auf eine definierte Temperatur zu erwärmen oder zu kühlen.

Weiterhin kann vorgesehen sein, dass das wenigstens eine Temperierelement der Gebläseeinrichtung derart strömungstechnisch nachgeordnet ist, so dass das wenigstens eine Temperierelement zumindest einseitig oder beidseitig durch den zumindest einem durch die Gebläseeinrichtung erzeugten Luftvolumenstrom angeblasen wird.

Ein zumindest einseitiges Anblasen des wenigstens einen Temperierelements kann bspw. dann ausreichend sein, wenn das wenigstens eine Temperierelement durch ein Heizelement gebildet ist. Aufgrund dieser Anordnung kann ein temperierter, insbesondere erwärmter bzw. warmer, Luftvolumenstrom gebildet werden.

Ein zumindest beidseitiges Anblasen des wenigstens einen Temperierelements kann bspw. dann erforderlich sein, wenn das wenigstens eine Tempierelement durch ein Peltierelement gebildet ist. Durch das Peltierelement kann wahlweise ein warmer bzw. erwärmter oder ein gekühlter bzw. kalter Luftvolumenstrom gebildet werden.

Weiter kann vorgesehen sein, dass die Soll-Akkumulatoroberflächentemperatur zwischen ca. 25 Grad Celsius und ca. 55 Grad Celsius, vorzugsweise zwischen ca. 38 Grad Celsius und ca. 45 Grad Celsius liegt und/oder bei welcher die Soll-Akkumulatorzelltemperatur zwischen ca. 40 Grad Celsius und ca. 45 Grad Celsius, vorzugsweise zwischen ca. 42 Grad Celsius und ca. 43 Grad Celsius liegt.

Weiter kann vorgesehen sein, dass das Ladeeinrichtungsgehäuse zumindest ein oder mehrere weitere Luftaustrittsöffnungen umfasst, über welche zumindest ein Teil von dem von der Gebläseeinrichtung erzeugten Luftvolumenstrom an die Umgebung abgegeben werden kann.

Die ein oder mehreren Luftaustrittsöffnungen und/oder die ein oder mehreren weiteren Luftaustrittsöffnungen können einen ovalen, runden oder eckigen Querschnitt aufweisen. Alternativ können die ein oder mehreren Luftaustrittsöffnungen durch Luftkanäle, Düsen, Schlitze oder dergleichen gebildet sein.

Darüber hinaus können im Ladeeinrichtungsgehäuse ein oder mehrere Luftkanäle angeordnet sein, über welche der Luftvolumenstrom bzw. der temperierte Luftvolumenstrom zu den ein oder mehreren Luftaustrittsöffnungen und/oder zu den ein oder mehreren weiteren Luftaustrittsöffnungen geleitet werden kann.

Gemäß einem Ausführungsbeispiel kann der Akkumulator derart an der zumindest einen Akkumulator-Schnittstelle der Ladeeinrichtung koppelbar bzw. gekoppelt sein, so dass der Luftvolumenstrom zumindest näherungsweise senkrecht auf eine Außenfläche des Akkumulators trifft; d.h. der Akkumulator kann mit einem temperierten Luftvolumenstrom beaufschlagt werden, welcher in etwa senkrecht auf eine Außenfläche des Akkumulators trifft. Durch den entlang der Außenfläche des Akkumulators strömende Luftvolumenstrom kann der Akkumulator von außen erwärmt oder gekühlt werden. Der Luftvolumenstrom trifft derart auf die Außenfläche des Akkumulators auf, so dass sich der Luftvolumenstrom in einzelne Luftvolumenteilströme aufteilt, die entlang der Außenfläche des Akkumulators strömen und den Akkumulator somit von außen temperieren.

Gemäß einem weiteren Ausführungsbeispiel kann der Akkumulator derart an der zumindest einen Akkumulator-Schnittstelle der Ladeeinrichtung gekoppelt sein, so dass der Luftvolumenstrom in einem Winkel bzw. schräg auf eine Außenfläche des Akkumulators trifft; d.h. der Akkumulator kann mit einem Luftvolumenstrom beaufschlagt werden, welcher in etwa in einem Winkel bzw. schräg auf eine Außenfläche des Akkumulators trifft. Der Luftvolumenstrom kann bspw. in einem Winkel von wenigstens 10 Grad und höchstens 80 Grad, vorzugsweise zwischen ca. 30 Grad und ca. 50 Grad, auf die Außenfläche des Akkumulators treffen, wobei sich der Luftvolumenstrom dort in einzelne Luftvolumenteilströme aufteilt, die entlang der Außenfläche des Akkumulators strömen. Durch den entlang der Außenfläche des Akkumulators strömende Luftvolumenstrom kann der Akkumulator von außen erwärmt oder gekühlt werden. Bei diesem Ausführungsbeispiel kann der Luftvolumenstrom besser entlang der Außenfläche des Akkumulators treffen und so auf diese Weise den Akkumulator erwärmen oder kühlen.

Weiterhin kann vorgesehen sein, dass das Ladeeinrichtungsgehäuse zumindest näherungsweise U- oder V-förmig gebildet ist. Hierbei kann ein erster Schenkel eine Standfläche der Ladeeinrichtung ausbilden, während einem zweiten Schenkel die Akkumulator-Schnittstelle zugeordnet ist. Weiter kann vorgesehen sein, dass der erste Schenkel und der zweite Schenkel durch einen Verbindungsschenkel miteinander verbunden sind.

Es kann vorgesehen sein, dass die Gebläseeinrichtung im Inneren des ersten Schenkels, des zweiten Schenkels oder des Verbindungsschenkels vorgesehen ist.

Weiter kann vorgesehen sein, dass die Gebläseeinrichtung durch ein Radial- oder Zentrifugalgebläse gebildet ist.

Zudem kann es denkbar sein, dass der Akkumulator zumindest ein Akkumulatorgehäuse mit zumindest einer Akkumulator-Koppelstelle umfasst. Die Akkumulator-Koppelstelle kann an einer Außenseite des Akkumulatorgehäuses vorgesehen sein, über welche der Akkumulator an die Akkumulator-Schnittstelle einer Ladeeinrichtung gekoppelt werden kann bzw. koppelbar ist. Die Akkumulator-Koppelstelle kann vorzugsweise an einer ersten Flachseite des Akkumulators vorgesehen sein.

Innerhalb des Akkumulatorgehäuses können ein oder mehrere Akkumulatorzellen sowie zumindest ein Leitungsträger zum Betrieb des Akkumulators vorgesehen sein, wobei der Leitungsträger mit den ein oder mehreren Akkumulatorzellen elektrisch verbunden ist.

Weiter kann vorgesehen sein, dass die Außenfläche, insbesondere die Flach- oder Längsseite, des Akkumulators zumindest bereichsweise durch ein wärmetauschendes Element gebildet ist, d.h. das Akkumulatorgehäuse kann zumindest bereichsweise durch zumindest ein wärmetauschendes Element gebildet sein. Durch das wärmetauschende Element kann über die Akkumulatoroberfläche ein Wärmefluss zu den Akkumulatorzellen hin oder von den Akkumulatorzellen weg erfolgen, d.h. über das wärmetauschende Element kann die im Akkumulator erzeugte Wärme an die Umgebung abführbar ist bzw. abgeführt werden. In umgekehrter Weise kann über das wärmetauschende Element auch Wärme in den Akkumulator eingebracht werden. Das zumindest eine wärmetauschende Element kann Bestandteil des Akkumulatorgehäuses sein. Vorzugsweise kann eine zweite Flachseite des Akkumulators durch das zumindest eine wärmetauschende Element bereichsweise gebildet sein. Das zumindest eine wärmetauschende Element kann durch einen wärmeleitfähigen Kunststoff oder dergleichen gebildet sein.

Gemäß einer bevorzugten Ausführungsvariante kann vorgesehen sein, dass das wärmetauschende Element einen Akkumulatorzellhalter ausbildet, d.h. die Akkumulatorzellen können vom wärmetauschenden Element gehalten werden. Zwischen dem wärmetauschenden Element und den Akkumulatorzellen kann eine stoffschlüssige Verbindung vorgesehen sein, über welche die Akkumulatorzellen mit dem wärmetauschenden Element "wärmetechnisch" verbunden sind.

Der Akkumulator kann durch einen Lithium-Ionen Akkumulator oder sonstigen Akkumulatoren, wie bspw. Nickel-Cadmium-Akku, gebildet sein. Der Akkumulator kann vorzugsweise eine Nennspannung zwischen ca. 10 Volt und ca. 120 Volt aufweisen, wobei eine bevorzugte Nennspannung zwischen ca. 16 und 24 Volt betragen kann.

Wenn zuvor das erfindungsgemäße System beschrieben wurde, so sei an dieser Stelle ausdrücklich betont, dass alle Aspekte und Ausführungsvarianten, die im Zusammenhang mit dem System erläutert wurden, gleichermaßen Teilaspekte des nachfolgenden erfindungsgemäßen Verfahrens betreffen oder sein können. Wenn daher an einer Stelle bei der Beschreibung oder auch bei den Anspruchsdefinitionen von dem System die Rede ist, so gilt dies gleichermaßen für das erfindungsgemäße Verfahren. In umgekehrter Weise gilt dasselbe, so dass auch alle Aspekte die im Zusammenhang mit dem erfindungsgemäßen Verfahren erläutert werden, gleichermaßen Teilaspekte des Systems sein können.

Die Erfindung betrifft weiter ein Verfahren zur Temperierung eines Akkumulators zeitlich vor oder während des Ladens, welches zumindest die folgenden Schritte umfasst.

Zunächst erfolgt ein sensorisches Erfassen einer Ist-Akkumulatoroberflächentemperatur und/oder einer Ist-Akkumulatorzelltemperatur.

Anschließend erfolgt ein Vergleich der erfassten Ist-Akkumulatoroberflächentemperatur und/oder einer Ist-Akkumulatorzelltemperatur mit einer Soll-Akkumulatoroberflächentemperatur und/oder Soll-Akkumulatorzelltemperatur.

Danach erfolgt ein Erzeugen eines temperierten Luftvolumenstroms auf eine definierte Temperatur unter Berücksichtigung des Soll-Ist-Vergleichs der Akkumulatoroberflächentemperatur und/oder der Akkumulatorzelltemperatur.

Danach erfolgt ein Anblasen des Akkumulators mit dem temperierten Luftvolumen, so dass eine Soll-Akkumulatoroberflächentemperatur und/oder Soll-Akkumulatorzelltemperatur erreicht wird.

Bei dem Verfahren kann vorgesehen sein, dass bei Erreichen der Soll-Akkumulatoroberflächentemperatur und/oder Soll-Akkumulatorzelltemperatur die Temperierung des Luftvolumenstroms unterbrochen oder reduziert wird oder die Gebläseeinrichtung oder ein Temperierelement ausgeschaltet wird.

Weiterhin kann vorgesehen sein, dass der Luftvolumenstrom bei Unterschreitung der eine Soll-Akkumulatoroberflächentemperatur und/oder Soll-Akkumulatorzelltemperatur zum Erwärmen des Akkumulators auf eine Soll-Akkumulatoroberflächentemperatur und/oder Soll-Akkumulatorzelltemperatur auf eine definierte Temperatur zwischen ca. 30 Grad Celsius und ca. 75 Grad Celsius temperiert wird.

Weiterhin kann vorgesehen sein, dass der Luftvolumenstrom bei Überschreitung der eine Soll-Akkumulatoroberflächentemperatur und/oder Soll-Akkumulatorzelltemperatur zum Kühlen des Akkumulators auf eine Soll-Akkumulatoroberflächentemperatur und/oder Soll-Akkumulatorzelltemperatur auf eine definierte Temperatur zwischen ca. 0 Grad Celsius und ca. 29 Grad Celsius temperiert wird.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt ein Ausführungsbeispiel eines aus einer Ladeeinrichtung und einem Akkumulator bestehendes Systems in einer schematischen Seitenansicht.
Fig. 2 zeigt ein weiteres Ausführungsbeispiel eines aus einer Ladeeinrichtung und einem Akkumulator bestehendes Systems in einer schematischen Seitenansicht.
Fig. 3 zeigt ein weiteres Ausführungsbeispiel eines aus einer Ladeeinrichtung und einem Akkumulator bestehendes Systems in einer schematischen Seitenansicht.
Fig. 4 zeigt ein weiteres Ausführungsbeispiel eines aus einer Ladeeinrichtung und einem Akkumulator bestehendes Systems in einer schematischen Seitenansicht.

Für gleiche oder gleichwirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung und/oder der Akkumulator ausgestaltet sein können und stellt keine abschließende Begrenzung dar.

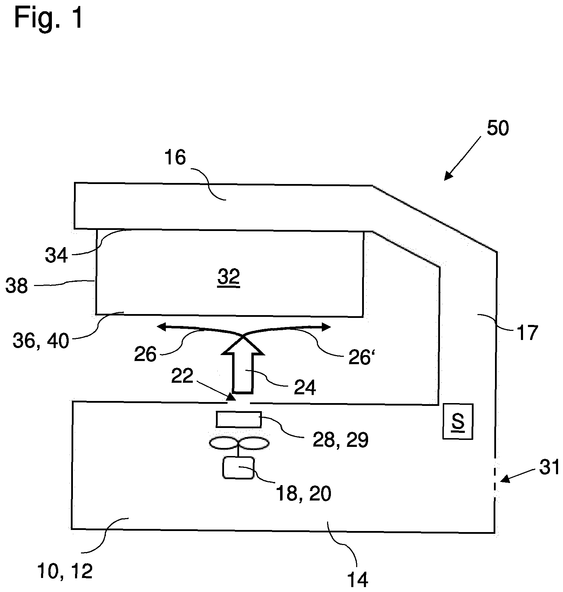

Die Figur 1 zeigt in einer schematischen Seitenansicht ein aus einer Ladeeinrichtung 10 und zumindest einen Akkumulator 32 gebildetes System 50 zum Laden und Temperieren eines Akkumulators 32.

Die Ladeeinrichtung 10 umfasst ein Ladeeinrichtungsgehäuse 12, welches zumindest näherungsweise U-förmig gebildet ist. Das Ladeeinrichtungsgehäuse 12 setzt sich aus zwei jeweils zueinander beanstandet bzw. gegenüberliegender Schenkeln 14, 16 und einem Verbindungsschenkel 17 zusammen. Die zumindest zwei gegenüberliegenden Schenkeln 14, 16 sind zumindest näherungsweise gleich lang gebildet; können aber auch unterschiedlich lang sein. Der Verbindungsschenkel 17 ist im Vergleich zu den gegenüberliegenden Schenkeln 14, 16 kürzer ausgebildet. Der mit Bezugsziffer 14 gekennzeichnete erste Schenkel bildet einen Standfuß des Ladeeinrichtungsgehäuses 12 bzw. der Ladeeinrichtung 10 aus.

Das Ladeeinrichtungsgehäuse 12 umfasst eine hier nicht dargestellte Akkumulator-Schnittstelle. Die Akkumulator-Schnittstelle ist dem durch Bezugsziffer 16 gekennzeichneten zweiten Schenkel zugeordnet. Insbesondere ist die Akkumulator-Schnittstelle an der jeweils innenliegenden Seite des zweiten Schenkels 16 vorgesehen. Der Akkumulator 32 umfasst an seiner ersten Flachseite 34 eine Akkumulator-Koppelstelle (nicht dargestellt), über welche der Akkumulator 32 an die Akkumulator-Schnittstelle mechanisch gekoppelt ist. Bei der mit der Akkumulator-Schnittstelle versehenen ersten Flachseite 34 des Akkumulators 32 handelt es sich um die Oberseite des Akkumulators 32.

Der Akkumulator 32 ist insbesondere derart an der Akkumulator-Schnittstelle gekoppelt, so dass seine zweite Flachseite 36 in etwa parallel zum ersten Schenkel 14 des Ladeeinrichtungsgehäuses 12 angeordnet ist.

Der Akkumulator 32 ist durch einen Lithium-Ionen Akkumulator oder dergleichen gebildet. Alternativ kann der Akkumulator 32 auch durch sonstige Akkumulatoren, wie bspw. Nickel-Cadmium-Akkumulator gebildet sein. Der Akkumulator 32 umfasst ein nicht näher dargestelltes Akkumulatorgehäuse 38, welches vorzugsweise ein- oder mehrteilig gebildet ist. Innerhalb des Akkumulatorgehäuses 38 sind u.a. ein oder mehrere Akkumulatorzellen (nicht dargestellt) sowie ein Leistungsträger (nicht dargestellt) angeordnet. Der Leistungsträger ist durch eine Leistungsplatine oder Platine oder dergleichen gebildet. Auf dem Leistungsträger sind diverse bzw. unterschiedliche Komponenten, wie bspw. Leistungs-Mosfets, Kontakteinheiten etc. angeordnet, die zum Betrieb und/oder zum Steuern des Akkumulators 32 erforderlich sind. Der Akkumulator 32 weist vorzugsweise eine Nennspannung zwischen ca. 10 Volt und ca. 120 Volt auf, wobei eine bevorzugte Nennspannung zwischen ca. 16 Volt und 23 Volt liegt.

Eine zweite Flachseite 36 des Akkumulators 32 ist zumindest bereichsweise durch ein wärmetauschendes Element 40 gebildet. Die zweite Flachseite 36 ist gegenüberliegend zur ersten Flachseite 34 des Akkumulators 32 angeordnet, d.h. bei der zweiten Flachseite 36 handelt es sich um den Boden bzw. um die Unterseite des Akkumulators 32.

Das wenigstens eine wärmetauschende Element 40 ist durch einen wärmeleitenden Kunststoff gebildet, so dass bspw. während des Ladens mittels der Ladeeinrichtung 10 entstehende Wärme im Inneren des Akkumulators 32 an die Umgebung abgegeben werden kann. Auf diese Weise wird vorteilhafterweise ein Überhitzen des Akkumulators 32 verhindert. In umgekehrter Weise kann durch das wenigstens eine wärmetauschende Element 40 auch Wärme in das Innere des Akkumulators 32 eingebracht werden, um den Akkumulator 32 zu erwärmen. Dadurch kann bspw. eine Unterkühlung des Akkumulators 32 verhindert werden.

Das Ladeeinrichtungsgehäuse 12 umfasst weiter eine Gebläseeinrichtung 18, welche gemäß der vorliegenden Ausführungsform im Inneren des ersten Schenkels 14 angeordnet ist, welcher den Standfuß des Ladeeinrichtungsgehäuses 12 ausbildet. Die Gebläseeinrichtung 18 kann selbstverständlich auch im Inneren des Verbindungsschenkels 17 und/oder des zweiten Schenkels 16 angeordnet sein.

Die Gebläseeinrichtung 18 kann bspw. durch ein Radialgebläse 20 oder durch ein Zentrifugalgebläse gebildet sein. Die Gebläseeinrichtung 18 ist dazu ausgebildet, einen Luftvolumenstrom (nicht dargestellt) zu erzeugen.

Das vorliegende System 50 umfasst weiter wenigstens eine (hier nicht dargestellte) Sensoreinrichtung, welche dazu eingerichtet ist, eine Ist-Akkumulatoroberflächentemperatur und/oder Ist-Akkumulatorzelltemperatur zu messen und/oder erfassen. Die Sensoreinrichtung kann bspw. durch einen Temperatursensor oder dergleichen gebildet sein.

Die wenigstens eine Sensoreinrichtung kann innerhalb des Akkumulators 32 angeordnet sein, welche die Ist-Akkumulatorzelltemperatur misst und/oder erfasst. Alternativ oder zusätzlich kann die wenigstens eine Sensoreinrichtung auch derart am Ladeeinrichtungsgehäuse 12 vorgesehen sein, welche eine Außenfläche des Akkumulators 32 hinsichtlich ihrer Ist-Akkumulatoroberflächentemperatur misst.

Darüber hinaus ist der Gebläseeinrichtung 18 strömungstechnisch zumindest ein Temperierelement 28 nachgeschaltet und/oder nachgeordnet. Das zumindest eine Temperierelement 28 ist durch ein Heizelement 29 gebildet, d.h. der von der Gebläseeinrichtung 18 erzeugte Luftvolumenstrom kann durch das Temperierelement 28 erwärmt werden, so dass ein temperierter bzw. erwärmter Luftvolumenstrom 24 gebildet wird. Dabei wird das Heizelement 29 vorzugsweise einseitig durch den von der Gebläseeinrichtung 18 erzeugten Luftvolumenstrom angeblasen. Der temperierte Luftvolumenstrom 24 ist derart auf den an der Akkumulator-Schnittstelle gekoppelten Akkumulator 32 gerichtet, so dass eine Außenfläche des Akkumulators 32 vom Luftvolumenstrom 24 umströmbar ist bzw. umströmt wird. Insbesondere wird der Akkumulator 32 derart mit dem temperierten Luftvolumenstrom 24 beaufschlagt, so dass dessen zweite Flachseite 36 vom Luftvolumenstrom 24 umströmt bzw. angeblasen wird.

Damit der durch die Gebläseeinrichtung 18 erzeugte Luftvolumenstrom bzw. der temperierte Luftvolumenstrom 24 auf die zweite Flachseite 36 des Akkumulators 32 auftreffen kann, ist im Ladeeinrichtungsgehäuse 12 eine Luftaustrittsöffnung 22 vorgesehen. Insbesondere weist der erste Schenkel 14 des Ladeeinrichtungsgehäuses 12 die Luftaustrittsöffnung 22 (nicht näher dargestellt) auf. Die Luftaustrittsöffnung 22 hat einen runden, ovalen oder eckigen Querschnitt. Alternativ kann die Luftaustrittsöffnung auch durch eine Düse gebildet sein. Die Luftaustrittsöffnung 22 ist der Gebläseeinrichtung 18 derart strömungstechnisch nachgeordnet, so dass der temperierte Luftvolumenstrom 24 gezielt auf die Außenfläche, insbesondere auf die zweite Flachseite 36, des Akkumulators 32 gerichtet ist.

Darüber hinaus sind im Ladeeinrichtungsgehäuse12 ein oder mehrere Luftkanäle (nicht dargestellt) angeordnet, über welche der Luftvolumenstrom bzw. der temperierte Luftvolumenstrom zu den ein oder mehreren Luftaustrittsöffnungen 22 geleitet werden kann.

Der zumindest eine Akkumulator 32 ist insbesondere derart an der zumindest einen Akkumulator-Schnittstelle der Ladeeinrichtung 10 gekoppelt, so dass der temperierte Luftvolumenstrom 24 zumindest näherungsweise senkrecht auf die zweite Flachseite 36 bzw. Unterseite des Akkumulators 32 trifft. Beim Auftreffen des temperierten Luftvolumenstroms 24 auf die zweite Flachseite 36 des Akkumulators 32 zerfällt dieser in eine Vielzahl von einzelnen Luftvolumenteilströme 26, 26', die entlang der zweiten Flachseite 36 strömen und den Akkumulator 32 von außen erwärmen. In der Figur 1 sind jedoch aus Gründen der Übersichtlichkeit nur zwei Luftvolumenteilströme 26, 26' dargestellt.

Das System 50 umfasst weiter eine mit der wenigstens einen Sensoreinrichtung in Verbindung stehende bzw. kommunizierende Steuer- und/oder Regeleinrichtung S, welche dazu eingerichtet ist, die Ist-Akkumulatoroberflächentemperatur und/oder Ist-Akkumulatorzelltemperatur mit einer Soll-Akkumulatoroberflächentemperatur und/oder Soll-Akkumulatorzelltemperatur zu vergleichen. Hierfür kann der Steuer- und/oder Regeleinrichtung S eine Auswerte- und/oder Recheneinheit zugeordnet sein bzw. in die Steuer- und/oder Regeleinrichtung S kann eine Auswerte-und/oder Recheneinheit integriert sein.

Die wenigstens eine Sensoreinrichtung und die Steuer- und/oder Regeleinrichtung S können drahtlos, bspw. mittels Funk, Bluetooth, oder Wifi miteinander kommunizieren. Alternativ können die wenigstens eine Sensoreinrichtung und die Steuer- und/oder Regeleinrichtung S elektrisch miteinander verbunden sein. Die elektrische Verbindung kann durch entsprechende Leitungen gebildet sein.

In Abhängigkeit von der erfassten Ist-Akkumulatoroberflächentemperatur und/oder Ist-Akkumulatorzelltemperatur steuert die Steuer- und/oder Regeleinrichtung S das Temperierelement 28 derartig an, so dass der Akkumulator 32 durch das Anblasen mittels eines temperierten Luftvolumenstroms 24 eine Soll-Akkumulatoroberflächentemperatur und/oder Soll-Akkumulatorzelltemperatur erreicht.

Wenn die Ist-Akkumulatoroberflächentemperatur und/oder Ist-Akkumulatorzelltemperatur des Akkumulators 32 bspw. aufgrund einer niedrigen Umgebungstemperatur zu niedrig ist, dann ist eine Erwärmung des Akkumulators 32 zeitlich vor oder während des Ladens erforderlich. Der durch die Gebläseeinrichtung 18 erzeugte Luftvolumenstrom wird dabei auf eine Temperatur zwischen ca. 45° Celsius und ca. 65° Celsius erwärmt, so dass ein temperierter Luftvolumenstrom 24 erzeugt wird. Durch den temperierten, insbesondere warmen, Luftvolumenstrom 24 lässt sich folglich auch der Akkumulator 32 derart erwärmen, so dass dieser eine Soll-Akkumulatoroberflächentemperatur und/oder Soll-Akkumulatorzelltemperatur aufweist. Bei Erreichen einer Soll-Akkumulatoroberflächentemperatur und/oder Soll-Akkumulatorzelltemperatur kann der Akkumulator 32 besser und/oder schneller geladen werden. Auch neigen die Akkumulatorzellen nicht dazu, zu schnell zu altern.

Wenn der Akkumulator 32 bspw. sehr schnell erwärmt werden muss, so kann durch die Steuer- und/oder Regeleinrichtung S auch zusätzlich die Gebläseeinrichtung 18 derart angesteuert werden, so dass der Luftvolumenstrom kurzzeitig erhöht wird. Auf diese Weise kann das Erwärmen des Akkumulators 32 bzw. das Erreichen einer Soll-Akkumulatoroberflächentemperatur und/oder Soll-Akkumulatorzelltemperatur beschleunigt werden.

Eine Soll-Akkumulatoroberflächentemperatur liegt zwischen ca. 25 Grad Celsius und 55 Grad Celsius, vorzugsweise zwischen ca. 38 Grad Celsius und ca. 45 Grad Celsius und/oder eine Soll-Akkumulatorzelltemperatur liegt zwischen ca. 40° Celsius und 45° Celsius, vorzugswischen zwischen ca. 42 Grad Celsius und 43 Grad Celsius.

Mit der in Figur 1 gezeigten Ladeeinrichtung 10 ist es somit möglich, den durch die Gebläseeinrichtung 18 erzeugten Luftvolumenstrom auf eine definierte Temperatur zu erwärmen, so dass durch das Anblasen des Akkumulators 32 dieser über den temperierten Luftvolumenstrom 24 erwärmt werden kann, bis eine Soll-Akkumulatoroberflächentemperatur und/oder Soll-Akkumulatorzelltemperatur erreicht wird.

Stellt die Steuer- und/oder Regeleinrichtung S, insbesondere die Auswerteeinheit, bei ihrem Ist-Soll-Vergleich fest, dass die Ist-Akkumulatoroberflächentemperatur und/oder Ist-Akkumulatorzelltemperatur der Soll-Akkumulatoroberflächentemperatur und/oder Soll-Akkumulatorzelltemperatur zumindest näherungsweise entspricht, so kann die Temperierung des Luftvolumenstroms unterbrochen oder reduziert werden oder die Gebläseeinrichtung 18 und/oder das Temperierelement (28) ausgeschaltet werden.

Bei Abweichung der Ist-Akkumulatoroberflächentemperatur und/oder Ist-Akkumulatorzelltemperatur von der Soll-Akkumulatoroberflächentemperatur und/oder Soll-Akkumulatorzelltemperatur ist die Steuer- und/oder Regeleinrichtung S dazu eingerichtet, die Gebläseeinrichtung 18 und/oder das Temperierelement 28 zu aktivieren und/oder den Luftvolumenstrom wieder zu temperieren.

Stellt die Steuer- und/oder Regeleinrichtung S, insbesondere die Auswerteeinheit, bei ihrem Ist-Soll-Vergleich fest, dass die Ist-Akkumulatoroberflächentemperatur und/oder Ist-Akkumulatorzelltemperatur oberhalb der Soll-Akkumulatoroberflächentemperatur und/oder Soll-Akkumulatorzelltemperatur liegt, dann ist die Steuer- und/oder Regeleinrichtung derart ausgebildet, das Temperierelement und/oder die Gebläseeinrichtung zu deaktivieren. Die Temperierung des Akkumulators 32 erfolgt erst dann wieder, wenn ein Erwärmen des Akkumulators 32 auf eine Soll-Akkumulatoroberflächentemperatur und/oder Soll-Akkumulatorzelltemperatur erforderlich ist.

Das Ladeeinrichtungsgehäuse 12 umfasst zumindest ein oder mehrere Lufteintrittsöffnungen 31 (hier drei Öffnungen), welche schlitzartig ausgebildet sind. Die ein oder mehreren Lufteintrittsöffnungen 31 dienen dazu, dass die Gebläseeinrichtung 18, insbesondere fluidisch, mit der Umgebung verbunden ist, d.h. die Gebläseeinrichtung 18 kann somit die Luft zur Erzeugung des Luftvolumenstroms aus der Umgebung ansaugen, welche anschließend auf eine definierte Temperatur erwärmt wird.

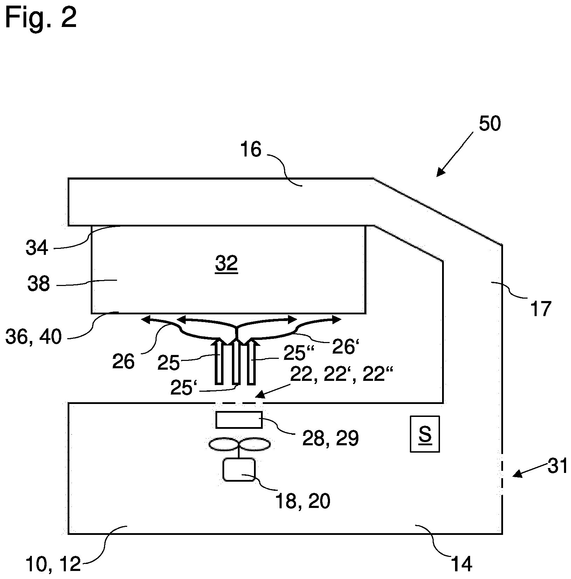

In Figur 2 ist ein weiteres Ausführungsbeispiel des aus zumindest einen Akkumulator 32 und einer Ladeeinrichtung 10 gebildeten Systems 50 in einer schematischen Seitenansicht dargestellt. Zusätzlich zu dem in Figur 1 gezeigten Ausführungsbeispiel, umfasst das in Figur 2 gezeigte Ladeeinrichtungsgehäuse 12 der Ladeeinrichtung 10 drei Luftaustrittsöffnungen 22, 22', 22", so dass der durch die Gebläseeinrichtung 18 erzeugte und durch das wenigstens eine Temperierelement 28 temperierte Luftvolumenstrom in drei einzelne bzw. geteilte Luftvolumenströme 25, 25', 25" aufgeteilt wird, die jeweils auf die zweite Flachseite 36 bzw. auf die Unterseite des Akkumulators 32 auftreffen und sich dort in weitere Luftvolumenteilströme 26, 26', 26" aufteilen. Dies hat sich insbesondere dahingehend als vorteilhaft erwiesen, da hier die Luftvolumenströme 22, 22', 22", auf unterschiedliche Bereiche der zweiten Flachseite 36 des Akkumulators 32 auftreffen, wodurch eine bessere Erwärmung oder eine bessere Kühlung des Akkumulators 32 möglich ist.

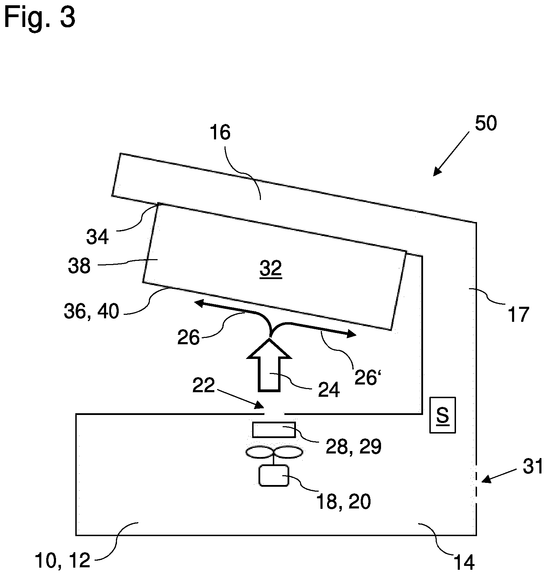

In der Figur 3 ist ein weiteres Ausführungsbeispiel des aus zumindest einem Akkumulator 32 und einer Ladeeinrichtung 10 gebildeten Systems 50 in einer schematischen Seitenansicht dargestellt. Das in Figur 3 gezeigte System 50 unterscheidet sich gegenüber dem in Figur 1 gezeigten System 50 lediglich darin, dass das Ladeeinrichtungsgehäuse 12 der Ladeeinrichtung 10 zumindest näherungsweise V-förmig gebildet ist.

Insbesondere ist der erste Schenkel 14 gegenüber dem zweiten Schenkel 16 winkelig angeordnet. Infolgedessen ist der Akkumulator 32 derart an der zumindest einen Akkumulator-Schnittstelle gekoppelt, so dass der Luftvolumenstrom winkelig auf die Außenfläche, insbesondere auf die zweite Flachseite 36, des Akkumulators 32 trifft, d.h. die zweite Flachseite 36 ist gegenüber dem zweiten Schenkel 16 des Ladeeinrichtungsgehäuses 12 schräg bzw. in einem Winkel angeordnet. Der Winkel kann vorzugsweise zwischen ca. 10 Grad und 80 Grad, vorzugsweise von 30 Grad, umfassen.

Bei einer solchen Anordnung trifft der temperierte Luftvolumenstrom 24 schräg bzw. in einem Winkel auf die zweite Flachseite 36 des Akkumulators 32 und teilt sich dann in einzelne Luftvolumenteilströme 26, 26' auf, so dass diese Luftvolumenteilströme 26, 26' entlang der zweiten Flachseite 36 des Akkumulators 32 strömen und den Akkumulator 32 entsprechend wärmen oder kühlen, bis eine Soll-Akkumulatoroberflächentemperatur und/oder Soll-Akkumulatorzelltemperatur erreicht ist.

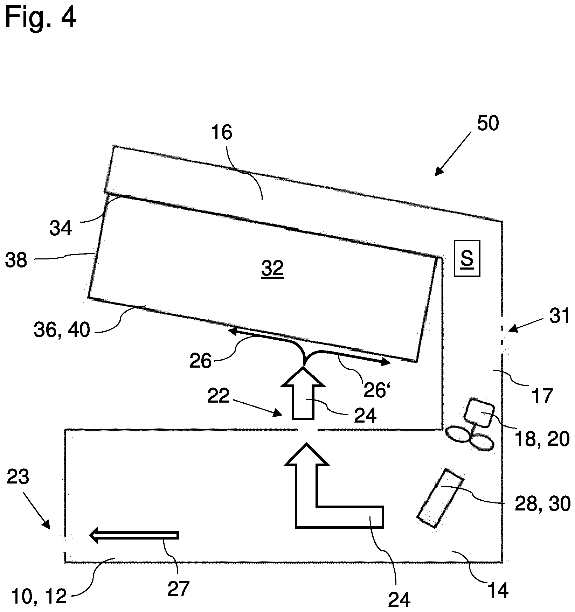

In der Figur 4 ist ein weiteres Ausführungsbeispiel des aus zumindest einem Akkumulator 32 und einer Ladeeinrichtung 10 gebildeten Systems 50 in einer schematischen Seitenansicht dargestellt. Das in Figur 4 gezeigte Ausführungsbeispiel unterscheidet sich gegenüber den Figuren 1 bis 3 hinsichtlich der Anordnung und Ausbildung der Gebläseeinrichtung 18 sowie des Temperierelements 28.

Demnach ist die Gebläseeinrichtung 18 bspw. in Form eines Radialgebläses 19 im Inneren des Verbindungschenkels 17 angeordnet. Über entsprechende (hier drei) Lufteintrittsöffnungen 31, kann die Gebläseeinrichtung 18 Luft aus der Umgebung ansaugen.

Der Gebläseeinrichtung 18 ist strömungstechnisch wenigstens ein Temperierelement 28 nachgeordnet, wobei das wenigstens eine Temperierelement 28 durch ein Peltierelement 30 gebildet ist; d.h. in Abhängigkeit von der jeweiligen Ist-Akkumulatoroberflächentemperatur und/oder Ist-Akkumulatorzelltemperatur kann der von der Gebläseeinrichtung 18 erzeugte Luftvolumenstrom durch das Temperierelement 28 wahlweise erwärmt oder gekühlt werden, so dass ein temperierter Luftvolumenstrom 24 gebildet wird.

Das wenigstens eine Temperierelement 28 ist der Gebläseeinrichtung 18 derart nachgeordnet, so dass dieses beidseitig von dem von der Gebläseeinrichtung 18 erzeugten Luftvolumenstrom angeblasen wird. Insbesondere teilt sich der Luftvolumenstrom beim Auftreffen auf das wenigstens eine Temperierelement 28 derart auf, so dass dieser beidseitig entlang des Peltierelements 30 strömt. Ein Teil des Luftvolumenstroms 27 wird über eine entsprechende weitere Luftaustrittsöffnung 23 wieder an die Umgebung abgegeben. Dies erfolgt über hier nicht dargestellte Luftkanäle, die im Inneren des Ladeeinrichtungsgehäuses 12 angeordnet sind, um den abzuführenden Luftvolumenteilstrom 27 entsprechend leiten zu können.

Wie bereits bei den vorangegangen Figuren 1 bis 3 beschrieben, ist der temperierte Luftvolumenstrom 24 über die im Ladeeinrichtungsgehäuse 12 vorgesehene Luftaustrittsöffnung 22 derart auf den an der Akkumulator-Schnittstelle gekoppelten Akkumulator 32 gerichtet, so dass eine Außenfläche des Akkumulators 32 vom Luftvolumenstrom 24 umströmbar ist bzw. umströmt wird. Im Ladeeinrichtungsgehäuse 12 sind ein oder mehrere Luftkanäle (nicht dargestellt) angeordnet, über welche der Luftvolumenstrom bzw. der temperierte Luftvolumenstrom zu den ein oder mehreren Luftaustrittsöffnungen 22 geleitet werden kann.

Insbesondere wird der Akkumulator 32 derart mit dem temperierten Luftvolumenstrom 24 beaufschlagt, so dass dessen zweite Flachseite 36 vom Luftvolumenstrom 24 umströmt bzw. angeblasen wird. Beim Auftreffen des temperierten Luftvolumenstroms 24 auf die zweite Flachseite 36 des Akkumulators 32 zerfällt dieser in eine Vielzahl von einzelnen Luftvolumenteilströme 26, 26', die entlang der zweiten Flachseite 36 strömen und den Akkumulator 32 von außen erwärmen oder kühlen. In der Figur 4 sind jedoch aus Gründen der Übersichtlichkeit nur zwei Luftvolumenteilströme 26, 26' dargestellt.

Die Verwendung eines Peltierelements 30 bringt den Vorteil mit sich, dass der Akkumulator 32 je nach seiner Ist-Akkumulatoroberflächentemperatur und/oder seiner Ist-Akkumulatorzelltemperatur wahlweise erwärmt oder gekühlt werden kann.

Dies bedeutet, dass in Abhängigkeit von der erfassten Ist-Akkumulatoroberflächentemperatur und/oder Ist-Akkumulatorzelltemperatur die Steuer- und/oder Regeleinrichtung S das Temperierelement 28 derartig ansteuert, so dass der Akkumulator 32 durch das Anblasen mittels eines temperierten Luftvolumenstroms 24 eine Soll-Akkumulatoroberflächentemperatur und/oder Soll-Akkumulatorzelltemperatur erreicht.

Sofern die Ist-Akkumulatoroberflächentemperatur und/oder Ist-Akkumulatorzelltemperatur des Akkumulators 32 bspw. aufgrund einer niedrigen Umgebungstemperatur zu niedrig ist, dann ist eine Erwärmung des Akkumulators 32 zeitlich vor oder während des Ladens erforderlich. Der durch die Gebläseeinrichtung 18 erzeugte Luftvolumenstrom wird dabei auf eine Temperatur zwischen ca. 30 Grad Celsius und ca. 75 Grad Celsius erwärmt, so dass ein temperierter Luftvolumenstrom 24 erzeugt wird. Durch den temperierten, insbesondere warmen, Luftvolumenstrom 24 lässt sich folglich auch der Akkumulator 32 derart erwärmen, so dass dieser eine Soll-Akkumulatoroberflächentemperatur und/oder Soll-Akkumulatorzelltemperatur aufweist.

Wenn der Akkumulator 32 bspw. sehr schnell erwärmt werden muss, so kann durch die Steuer- und/oder Regeleinrichtung S auch zusätzlich die Gebläseeinrichtung 18 derart angesteuert werden, so dass der Luftvolumenstrom kurzzeitig erhöht wird. Auf diese Weise kann das Erwärmen des Akkumulators 32 bzw. das Erreichen einer Soll-Akkumulatoroberflächentemperatur und/oder Soll-Akkumulatorzelltemperatur beschleunigt werden.

Sofern die Ist-Akkumulatoroberflächentemperatur und/oder Ist-Akkumulatorzelltemperatur des Akkumulators 32 bspw. aufgrund eines vorherigen Einsatzes des Akkumulators 32 oder hohen Umgebungstemperaturen zu hoch ist, so ist eine Kühlung des Akkumulators 32 erforderlich. Der durch die Gebläseeinrichtung 18 erzeugte Luftvolumenstrom 24 wird dabei auf eine Temperatur zwischen ca. 0 Grad Celsius und ca. 29 Grad Celsius gekühlt, so dass ein temperierter Luftvolumenstrom 24 erzeugt wird. Durch den gekühlten bzw. kühlen Luftvolumenstrom 24 lässt sich folglich auch der Akkumulator 32 auf eine definierte Temperatur kühlen, so dass durch das Anblasen des Akkumulators 32 mit dem gekühlten Luftvolumenstrom 24 eine Soll-Akkumulatoroberflächentemperatur und/oder Soll-Akkumulatorzelltemperatur erreicht wird. Ein Kühlen des Akkumulators 32 kann ein Überhitzen bzw. eine thermische Beschädigung des Akkumulators 32 verhindern.

Wenn der Akkumulator 32 bspw. sehr schnell abgekühlt werden muss, so kann durch die Steuer- und/oder Regeleinrichtung S auch zusätzlich die Gebläseeinrichtung 18 derart angesteuert werden, so dass der Luftvolumenstrom kurzzeitig erhöht wird. Auf diese Weise kann das Kühlen des Akkumulators 32 bzw. das Erreichen einer Soll-Akkumulatoroberflächentemperatur und/oder Soll-Akkumulatorzelltemperatur beschleunigt werden.

Stellt die Steuer- und/oder Regeleinrichtung S, insbesondere die Auswerteeinheit, bei ihrem Ist-Soll-Vergleich fest, dass die Ist-Akkumulatoroberflächentemperatur und/oder Ist-Akkumulatorzelltemperatur der Soll-Akkumulatoroberflächentemperatur und/oder Soll-Akkumulatorzelltemperatur zumindest näherungsweise entspricht, so kann die Temperierung des Luftvolumenstroms unterbrochen und/oder reduziert werden oder die Gebläseeinrichtung 18 ausgeschaltet werden.

Bei Abweichung der Ist-Akkumulatoroberflächentemperatur und/oder Ist-Akkumulatorzelltemperatur von der Soll-Akkumulatoroberflächentemperatur und/oder Soll-Akkumulatorzelltemperatur ist die Steuer- und/oder Regeleinrichtung S dazu eingerichtet, die Gebläseeinrichtung 18 zu aktivieren und/oder den Luftvolumenstrom wieder zu temperieren.

Wie auch bei den Figuren 1 bis 3 beschrieben, liegt die Soll-Akkumulatoroberflächentemperatur zwischen ca. 25 Grad Celsius und ca. 55 Grad Celsius, vorzugsweise zwischen ca. 38 Grad Celsius und ca. 45° Celsius und/oder die Soll-Akkumulatorzelltemperatur zwischen ca. 40 Grad Celsius und ca. 45 Grad Celsius, vorzugswischen zwischen ca. 42 Grad Celsius und ca. 43 Grad Celsius.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 10: Ladeeinrichtung
- 12: Ladeeinrichtungsgehäuse
- 14: Erster Schenkel des Gehäuses
- 16: Zweiter Schenkel des Gehäuses
- 17: Verbindungsschenkel
- 18: Gebläseeinrichtung
- 20: Radialgebläse
- 22: Luftaustrittsöffnung
- 22': Luftaustrittsöffnung
- 22": Luftaustrittsöffnung
- 23: weitere Luftaustrittsöffnung
- 24: temperierter Luftvolumenstrom
- 25: einzelner bzw. geteilter Luftvolumenstrom
- 26: Luftvolumenteilstrom
- 26': Luftvolumenteilstrom
- 26": Luftvolumenteilstrom
- 27: abgeführter Luftvolumenteilstrom
- 28: Temperierelement
- 29: Heizelement
- 30: Peltierelement
- 31: Lufteintrittsöffnung

- 32: Akkumulator
- 34: erste Flachseite des Akkumulators
- 36: zweite Flachseite des Akkumulators
- 38: Akkumulatorgehäuse
- 40: wärmetauschendes Element

- 50: System

- S: Steuer- und/oder Regeleinrichtung

## Patentansprüche

1. Ein aus zumindest einer Ladeeinrichtung (10) und einem Akkumulator (32) gebildetes System (50), wobei:
- die Ladeeinrichtung (10) ein Ladeeinrichtungsgehäuse (12) mit zumindest einer Akkumulator-Schnittstelle umfasst, an welcher zumindest ein Akkumulator (32) mechanisch koppelbar ist bzw. gekoppelt ist,
- die Ladeeinrichtung (10) zumindest eine innerhalb des Ladeeinrichtungsgehäuses (12) angeordnete Gebläseeinrichtung (18) umfasst, welche dazu eingerichtet ist, einen Luftvolumenstrom zu erzeugen,
- die Ladeeinrichtung (10) und/oder der Akkumulator (32) wenigstens eine Sensoreinrichtung umfassen, welche dazu eingerichtet ist, eine Ist-Akkumulatoroberflächentemperatur und/oder Ist-Akkumulatorzelltemperatur zu messen und/oder erfassen,
- die Ladeeinrichtung (10) wenigstens ein Temperierelement (28) zur Temperierung des von der Gebläseeinrichtung (18) erzeugten Luftvolumenstroms auf eine definierte Temperatur umfasst, wobei das wenigstens eine Temperierelement (28) der Gebläseeinrichtung (18) strömungstechnisch nachgeschaltet ist, und wobei der temperierte Luftvolumenstrom (24) derart auf den Akkumulator (32) gerichtet ist, so dass dessen Außenfläche vom temperierten Luftvolumenstrom (24) umströmt wird,
- die Ladeeinrichtung (10) eine mit der wenigstens einen Sensoreinrichtung in Verbindung stehende bzw. kommunizierende Steuer- und/oder Regeleinrichtung (S) umfasst, welche dazu eingerichtet ist, die Ist-Akkumulatoroberflächentemperatur und/oder Ist-Akkumulatorzelltemperatur mit einer Soll-Akkumulatoroberflächentemperatur und/oder Soll-Akkumulatorzelltemperatur zu vergleichen,
wobei das Temperierelement (28) in Abhängigkeit vom Soll-Ist-Vergleich der Akkumulatoroberflächentemperatur und/oder der Akkumulatorzelltemperatur derart angesteuert wird, so dass der Akkumulator (32) durch das Anblasen mittels des temperierten Luftvolumenstroms (24) eine Soll-Akkumulatoroberflächentemperatur und/oder Soll-Akkumulatorzelltemperatur aufweist und/oder erreicht, wobei
- das Ladeeinrichtungsgehäuse (12) zumindest eine oder mehrere Lufteintrittsöffnungen (31) aufweist, über welche die Gebläseeinrichtung (18), insbesondere fluidisch, mit der Umgebung verbunden ist, und wobei
- das Ladeeinrichtungsgehäuse (12) zumindest eine oder mehrere Luftaustrittsöffnungen (22) umfasst, über welche der von der Gebläseeinrichtung (18) erzeugte Luftvolumenstrom aus dem Ladeeinrichtungsgehäuse (12) austritt, um den Akkumulator (32) mit dem temperierten Luftvolumenstrom (24) anzublasen.

2. System nach Anspruch 1, bei welchem die Steuer- und/oder Regeleinrichtung (S) die Gebläseeinrichtung (18) derart ansteuert, so dass der durch die Gebläseeinrichtung (18) erzeugte Luftvolumenstrom in seinem Volumen und/oder in seiner Geschwindigkeit erhöht oder reduziert werden kann.

3. System nach Anspruch 1 oder 2, bei welchem die wenigstens eine Sensoreinrichtung derart an der Ladeeinrichtung (10) angeordnet ist, so dass eine Ist-Akkumulatoroberflächentemperatur des Akkumulators (32) gemessen und/oder erfasst werden kann.

4. System nach Anspruch 1 oder 2, bei welchem die wenigstens eine Sensoreinrichtung im Inneren des Akkumulators (32) angeordnet ist, so dass eine Ist-Akkumulatorzelltemperatur des Akkumulators (32) gemessen und/oder erfasst werden kann.

5. System nach einem der vorherigen Ansprüche, bei welchem der Akkumulator (32) derart an der zumindest einen Akkumulator-Schnittstelle der Ladeeinrichtung (10) gekoppelt ist, so dass eine Flachseite und/oder Längsseite des Akkumulators (32) mit dem temperierten Luftvolumenstrom (24) beaufschlagt wird.

6. System nach einem der vorherigen Ansprüche, bei welchem der Luftvolumenstrom zum Erwärmen des Akkumulators (32) auf eine Soll-Akkumulatoroberflächentemperatur und/oder Soll-Akkumulatorzelltemperatur durch das wenigstens eine Temperierelement (28) auf eine definierte Temperatur zwischen ca. 30 Grad Celsius und ca. 75 Grad Celsius temperierbar ist.

7. System nach einem der vorherigen Ansprüche, bei welcher der Luftvolumenstrom zum Kühlen des Akkumulators (32) auf eine Soll-Akkumulatoroberflächentemperatur und/oder Soll-Akkumulatorzelltemperatur durch das wenigstens eine Temperierelement (28) auf eine definierte Temperatur von zwischen ca. 0 Grad Celsius und ca. 29 Grad Celsius temperierbar ist.

8. System nach einem der vorherigen Ansprüche, bei welchem die Steuer- und/oder Regeleinrichtung (S) bei Erreichen der Soll-Akkumulatoroberflächentemperatur und/oder Soll-Akkumulatorzelltemperatur dazu eingerichtet ist, die Temperierung des Luftvolumenstroms zu unterbrechen oder zu reduzieren, oder die Gebläseeinrichtung (18) oder das Temperierelement (28) auszuschalten.

9. System nach einem der vorherigen Ansprüche, bei welchem das wenigstens eine Temperierelement (28) durch ein Heizelement (29), Peltierelement (30) oder dergleichen gebildet ist.

10. System nach einem der vorherigen Ansprüche, bei welchem das Temperierelement (28) der Gebläseeinrichtung (19) derart strömungstechnisch nachgeordnet ist, so dass das Temperierelement (28) zumindest einseitig oder beidseitig vom zumindest einem durch die Gebläseeinrichtung erzeugten Luftvolumenstrom angeblasen wird.

11. System nach einem der vorherigen Ansprüche, bei welchem die Soll-Akkumulatoroberflächentemperatur zwischen ca. 25 Grad Celsius und ca. 55 Grad Celsius, vorzugsweise zwischen ca. 38 Grad Celsius und ca. 45 Grad Celsius liegt und/oder bei welcher die Soll-Akkumulatorzelltemperatur zwischen ca. 40 Grad Celsius und ca. 45 Grad Celsius, vorzugswischen zwischen ca. 42 Grad Celsius und ca. 43 Grad Celsius liegt.

12. System nach einem der vorherigen Ansprüche, bei welchem der Akkumulator (32) derart an der zumindest einen Akkumulator-Schnittstelle der Ladeeinrichtung (10) gekoppelt ist bzw. koppelbar ist, so dass der temperierte Luftvolumenstrom (24) zumindest näherungsweise senkrecht auf die Außenfläche des Akkumulators (32) trifft.

13. System nach einem der vorherigen Ansprüche, bei welchem der Akkumulator (32) derart an der zumindest einen Akkumulator-Schnittstelle der Ladeeinrichtung (10) gekoppelt ist bzw. koppelbar ist, so dass der temperierte Luftvolumenstrom (24) in zumindest einem Winkel bzw. schräg auf die Außenfläche des Akkumulators (32) trifft.

14. System nach einem der vorherigen Ansprüche, bei welcher die Außenfläche des Akkumulators (32) zumindest bereichsweise durch ein wärmetauschendes Element (40) gebildet ist.

15. System nach zumindest einem der vorherigen Ansprüche, bei welchem das Ladeeinrichtungsgehäuse (12) zumindest annäherungsweise U- oder V-förmig gebildet ist.

16. Verfahren zur Temperierung eines Akkumulators (32) in einem aus dem Akkumulator (32) und einer Ladeeinrichtung (10) gebildeten System (50) nach zumindest einem der vorherigen Ansprüche, wobei das Verfahren zeitlich vor oder während des Ladens durchgeführt wird und zumindest die folgenden Schritte umfasst:
- Sensorisches Erfassen einer Ist-Akkumulatoroberflächentemperatur und/oder einer Ist-Akkumulatorzelltemperatur durch eine Sensoreinrichtung der Ladeeinrichtung (10) und/oder des Akkumulators (32),
- Vergleich der erfassten Ist-Akkumulatoroberflächentemperatur und/oder der Ist-Akkumulatorzelltemperatur mit einer Soll-Akkumulatoroberflächentemperatur und/oder Soll-Akkumulatorzelltemperatur durch eine mit der wenigstens einen Sensoreinrichtung in Verbindung stehende bzw. kommunizierende Steuer- und/oder Regeleinrichtung (S) der Ladeeinrichtung (10),
- Erzeugen und Temperierung eines temperierten Luftvolumenstroms (24) auf eine definierte Temperatur unter Berücksichtigung des Soll-Ist-Vergleichs der Akkumulatoroberflächentemperatur und/oder der Akkumulatorzelltemperatur durch eine innerhalb eines Ladeeinrichtungsgehäuses (12) angeordnete Gebläseeinrichtung (18) und wenigstens ein der Gebläseeinrichtung (18) strömungstechnisch nachgeschaltetes Temperierelement (28), wobei das Ladeeinrichtungsgehäuse (12) zumindest eine oder mehrere Lufteintrittsöffnungen (31) aufweist, über welche die Gebläseeinrichtung (18), insbesondere fluidisch, mit der Umgebung verbunden ist, und wobei das Ladeeinrichtungsgehäuse (12) zumindest eine oder mehrere Luftaustrittsöffnungen (22) umfasst, über welche der von der Gebläseeinrichtung (18) erzeugte Luftvolumenstrom aus dem Ladeeinrichtungsgehäuse (12) austritt, um den Akkumulator (32) mit dem temperierten Luftvolumenstrom (24) anzublasen,
- Anblasen des Akkumulators (32) mit dem temperierten Luftvolumenstrom (24), so dass eine Soll-Akkumulatoroberflächentemperatur und/oder Soll-Akkumulatorzelltemperatur erreicht wird, wobei der temperierte Luftvolumenstrom (24) derart auf den Akkumulator (32) gerichtet wird, so dass dessen Außenfläche vom temperierten Luftvolumenstrom (24) umströmt wird.

17. Verfahren nach Anspruch 16, bei welchem bei Erreichen der Soll-Akkumulatoroberflächentemperatur und/oder Soll-Akkumulatorzelltemperatur die Temperierung des Luftvolumenstroms unterbrochen oder reduziert wird oder die Gebläseeinrichtung (18) oder das Temperierelement (28) ausgeschaltet wird.

18. Verfahren nach Anspruch 16 oder Anspruch 17, bei welcher der Luftvolumenstrom bei Unterschreitung der Soll-Akkumulatoroberflächentemperatur und/oder Soll-Akkumulatorzelltemperatur zum Erwärmen des Akkumulators (32) auf eine Soll-Akkumulatoroberflächentemperatur und/oder Soll-Akkumulatorzelltemperatur auf eine definierte Temperatur zwischen ca. 30 Grad Celsius und ca. 75 Grad Celsius temperiert wird.

19. Verfahren nach Anspruch 16 oder Anspruch 17, bei welchem der Luftvolumenstrom bei Überschreitung der Soll-Akkumulatoroberflächentemperatur und/oder Soll-Akkumulatorzelltemperatur zum Kühlen des Akkumulators (32) auf eine Soll-Akkumulatoroberflächentemperatur und/oder Soll-Akkumulatorzelltemperatur auf eine definierte Temperatur zwischen ca. 0 Grad Celsius und ca. 29 Grad Celsius temperiert wird.

## Claims

1. A system (50) constituted of at least a charging device (10) and an accumulator (32), wherein:
- the charging device (10) includes a charging device housing (12) with at least one accumulator interface, to which at least one accumulator (32) can be mechanically coupled or is coupled,
- the charging device (10) includes at least one blower device (18) arranged within the charging device housing (12), which is configured to generate an air volume flow,
- the charging device (10) and/or the accumulator (32) include at least one sensor device, which is configured to measure and/or detect an actual accumulator surface temperature and/or actual accumulator cell temperature,
- the charging device (10) includes at least one tempering element (28) for tempering the air volume flow generated by the blower device (18) to a defined temperature, wherein the at least one tempering element (28) is arranged downstream of the blower device (18) in terms of flow, and wherein the tempered air volume flow (24) is directed to the accumulator (32) such that the outer surface thereof is flown around by the tempered air volume flow (24),
- the charging device (10) includes a control and/or regulation device (S) being in communication or communicating with the at least one sensor device, which is configured to compare the actual accumulator surface temperature and/or actual accumulator cell temperature to a target accumulator surface temperature and/or target accumulator cell temperature, wherein the tempering element (28) is controlled depending on the target-actual comparison of the accumulator surface temperature and/or the accumulator cell temperature such that the accumulator (32) has or reaches a target accumulator surface temperature and/or target accumulator cell temperature by blowing by means of the tempered air volume flow (24), wherein
- the charging device housing (12) comprises at least one or more air entry openings (31), via which the blower device (18) is, in particular fluidically, connected to the environment, and wherein
- the charging device housing (12) includes at least one or more air exit openings (22), via which the air volume flow generated by the blower device (18) exits the charging device housing (12) to blow on the accumulator (32) with the tempered air volume flow (24).

2. The system according to claim 1, in which the control and/or regulation device (S) controls the blower device (18) such that the air volume flow generated by the blower device (18) can be increased or reduced in its volume and/or in its speed.

3. The system according to claim 1 or 2, in which the at least one sensor device is arranged at the charging device (10) such that an actual accumulator surface temperature of the accumulator (32) can be measured and/or detected.

4. The system according to claim 1 or 2, in which the at least one sensor device is arranged in the interior of the accumulator (32) such that an actual accumulator cell temperature of the accumulator (32) can be measured and/or detected.

5. The system according to any one of the preceding claims, in which the accumulator (32) is coupled to the at least one accumulator interface of the charging device (10) such that a flat side and/or longitudinal side of the accumulator (32) is supplied with the tempered air volume flow (24).

6. The system according to any one of the preceding claims, in which the air volume flow can be tempered to a defined temperature between ca. 30 degrees Celsius and ca. 75 degrees Celsius by the at least one tempering element (28) for heating the accumulator (32) to a target accumulator surface temperature and/or target accumulator cell temperature.

7. The system according to any one of the preceding claims, in which the air volume flow can be tempered to a defined temperature between ca. 0 degrees Celsius and ca. 29 degrees Celsius by the at least one tempering element (28) for cooling the accumulator (32) to a target accumulator surface temperature and/or target accumulator cell temperature.

8. The system according to any one of the preceding claims, in which the control and/or regulation device (S) is configured, upon reaching the target accumulator surface temperature and/or target accumulator cell temperature, to interrupt or reduce the tempering of the air volume flow or to turn off the blower device (18) or the tempering element (28).

9. The system according to any one of the preceding claims, in which the at least one tempering element (28) is formed by a heating element (29), Peltier element (30) or the like.

10. The system according to any one of the preceding claims, in which the tempering element (28) is arranged downstream of the blower device (19) in terms of flow such that the tempering element (28) is blown by at least one air volume flow generated by the blower device at least on one side or both sides.

11. The system according to any one of the preceding claims, in which the target accumulator surface temperature is between ca. 25 degrees Celsius and ca. 55 degrees Celsius, preferably between ca. 38 degrees Celsius and ca. 45 degrees Celsius, and/or in which the target accumulator cell temperature is between ca. 40 degrees Celsius and ca. 45 degrees Celsius, preferably between ca. 42 degrees Celsius and ca. 43 degrees Celsius.

12. The system according to any one of the preceding claims, in which the accumulator (32) is coupled or can be coupled to the at least one accumulator interface of the charging device (10) such that the tempered air volume flow (24) at least approximately perpendicularly impinges on the outer surface of the accumulator (32).

13. The system according to any one of the preceding claims, in which the accumulator (32) is coupled or can be coupled to the at least one accumulator interface of the charging device (10) such that the tempered air volume flow (24) impinges on the outer surface of the accumulator (32) at least at an angle or in oblique manner.

14. The system according to any one of the preceding claims, in which the outer surface of the accumulator (32) is formed by a heat exchanging element (40) at least in certain areas.

15. The system according to any one of the preceding claims, in which the charging device housing (12) is formed at least approximately U- or V-shaped.

16. A method for tempering an accumulator (32) in a system (50) constituted of the accumulator (32) and a charging device (10) according to at least one of the preceding claims, wherein the method is performed in terms of time before or during charging and includes at least the following steps:
- sensorily detecting an actual accumulator surface temperature and/or an actual accumulator cell temperature by a sensor device of the charging device (10) and/or the accumulator (32),
- comparing the detected actual accumulator surface temperature and/or the actual accumulator cell temperature to a target accumulator surface temperature and/or target accumulator cell temperature by a control and/or regulation device (S) of the charging device (10) being in communication or communicating with the at least one sensor device,
- generating and tempering a tempered air volume flow (24) to a defined temperature considering the target-actual comparison of the accumulator surface temperature and/or the accumulator cell temperature by a blower device (18) arranged within a charging device housing (12) and at least one tempering element (28) arranged downstream of the blower device (18) in terms of flow, wherein the charging device housing (12) comprises at least one or more air entry openings (31), via which the blower device (18) is, in particular fluidically, connected to the environment, and wherein the charging device housing (12) includes at least one or more air exit openings (22), via which the air volume flow generated by the blower device (18) exits the charging device housing (12), to blow on the accumulator (32) with the tempered air volume flow (24),
- blowing on the accumulator (32) with the tempered air volume flow (24) such that a target accumulator surface temperature and/or target accumulator cell temperature is reached, wherein the tempered air volume flow (24) is directed to the accumulator (32) such that the outer surface thereof is flown around by the tempered air volume flow (24).

17. The method according to claim 16, in which, upon reaching the target accumulator surface temperature and/or target accumulator cell temperature, the tempering of the air volume flow is interrupted or reduced or the blower device (18) or the tempering element (28) is turned off.

18. The method according to claim 16 or claim 17, in which, upon falling below the target accumulator surface temperature and/or target accumulator cell temperature, the air volume flow is tempered to a defined temperature between ca. 30 degrees Celsius and ca. 75 degrees Celsius for heating the accumulator (32) to a target accumulator surface temperature and/or target accumulator cell temperature.

19. The method according to claim 16 or claim 17, in which, upon exceeding the target accumulator surface temperature and/or target accumulator cell temperature, the air volume flow is tempered to a defined temperature between ca. 0 degrees Celsius and ca. 29 degrees Celsius for cooling the accumulator (32) to a target accumulator surface temperature and/or target accumulator cell temperature.

## Revendications

1. Système (50) formé à partir d'au moins un dispositif de charge (10) et d'un accumulateur (32), dans lequel :
- le dispositif de charge (10) comprend un boîtier de dispositif de charge (12) doté d'au moins une interface d'accumulateur à laquelle au moins un accumulateur (32) peut être couplé ou est couplé mécaniquement,
- le dispositif de charge (10) comprend au moins un dispositif de ventilation (18) disposé à l'intérieur du boîtier de dispositif de charge (12), lequel est conçu pour produire un flux volumique d'air,
- le dispositif de charge (10) et/ou l'accumulateur (32) comprend au moins un dispositif de détection qui est conçu pour mesurer et/ou détecter une température de surface d'accumulateur réelle et/ou une température de cellule d'accumulateur réelle,
- le dispositif de charge (10) comprend au moins un élément de thermorégulation (28) destiné à thermoréguler le flux volumique d'air produit par le dispositif de ventilation (18) à une température définie, dans lequel ledit au moins un élément de thermorégulation (28) est monté en aval du dispositif de ventilation (18) dans le sens de l'écoulement, et dans lequel le flux volumique d'air thermorégulé (24) est dirigé de telle manière que la surface extérieure de l'accumulateur (32) soit enveloppée par le flux volumique d'air thermorégulé (24),
- le dispositif de charge (10) comprend un dispositif de commande et/ou de régulation (S) qui est en liaison ou qui communique avec ledit au moins un dispositif de détection, lequel est conçu pour comparer la température de surface d'accumulateur réelle et/ou la température de cellule d'accumulateur réelle à une température de surface d'accumulateur de consigne et/ou une température de cellule d'accumulateur de consigne,
dans lequel l'élément de thermorégulation (28) est commandé en fonction de la comparaison consigne/réel de la température de surface d'accumulateur et/ou de la température de cellule d'accumulateur de telle manière que l'accumulateur (32) présente et/ou atteigne une température de surface d'accumulateur de consigne et/ou une température de cellule d'accumulateur de consigne par la ventilation effectuée au moyen du flux volumique d'air régulé (24), dans lequel
- le boîtier de dispositif de charge (12) comporte au moins une ou plusieurs ouvertures d'entrée d'air (31) par l'intermédiaire desquelles le dispositif de ventilation (18) est relié, en particulier par voie fluidique, à l'environnement, et dans lequel
- le boîtier de dispositif de charge (12) comprend au moins une ou plusieurs ouvertures de sortie d'air (22) par l'intermédiaire desquelles le flux volumique d'air produit par le dispositif de ventilation (18) sort du boîtier de dispositif de charge (12) afin de ventiler l'accumulateur (32) avec le flux volumique d'air thermorégulé (24).

2. Système selon la revendication 1, dans lequel le dispositif de commande et/ou de régulation (S) commande le dispositif de ventilation (18) de telle manière que le flux volumique d'air produit par le dispositif de ventilation (18) puisse être augmenté ou réduit en volume et/ou en vitesse.

3. Système selon la revendication 1 ou 2, dans lequel ledit au moins un dispositif de détection est disposé sur le dispositif de charge (10) de telle manière qu'une température de surface d'accumulateur réelle (32) puisse être mesurée et/ou détectée.

4. Système selon la revendication 1 ou 2, dans lequel ledit au moins un dispositif de détection est disposé à l'intérieur de l'accumulateur (32) de telle manière qu'une température de cellule d'accumulateur réelle de l'accumulateur (32) puisse être mesurée et/ou détectée.

5. Système selon l'une quelconque des revendications précédentes, dans lequel l'accumulateur (32) est couplé à ladite au moins une interface d'accumulateur du dispositif de charge (10) de telle manière qu'un côté plat et/ou qu'un côté long de l'accumulateur (32) soit exposé au flux volumique d'air thermorégulé (24).

6. Système selon l'une quelconque des revendications précédentes, dans lequel le flux volumique d'air peut être thermorégulé par ledit au moins un élément de thermorégulation (28) à une température définie comprise entre environ 30 degrés Celsius et environ 75 degrés Celsius pour chauffer l'accumulateur (32) à une température de surface d'accumulateur de consigne et/ou à une température de cellule d'accumulateur de consigne.

7. Système selon l'une quelconque des revendications précédentes, dans lequel le flux volumique d'air peut être thermorégulé par ledit au moins un élément de thermorégulation (28) à une température définie comprise entre environ 0 degré Celsius et environ 29 degrés Celsius pour refroidir l'accumulateur (32) à une température de surface d'accumulateur de consigne et/ou à une température de cellule d'accumulateur de consigne.

8. Système selon l'une quelconque des revendications précédentes, dans lequel le dispositif de commande et/ou de régulation (S) est conçu, lorsque la température de surface d'accumulateur de consigne et/ou la température de cellule d'accumulateur de consigne est atteinte, pour interrompre ou réduire la thermorégulation du flux volumique d'air, ou pour arrêter le dispositif de ventilation (18) ou l'élément de thermorégulation (28).

9. Système selon l'une quelconque des revendications précédentes, dans lequel ledit au moins un élément de thermorégulation (28) est formé par un élément chauffant (29), un élément Peltier (30) ou similaire.

10. Système selon l'une quelconque des revendications précédentes, dans lequel l'élément de thermorégulation (28) est disposé en aval du dispositif de ventilation (19) dans le sens de l'écoulement de telle manière que l'élément de thermorégulation (28) soit ventilé, sur au moins un côté ou sur les deux côtés, par au moins un flux volumique d'air produit par le dispositif de ventilation.

11. Système selon l'une quelconque des revendications précédentes, dans lequel la température de surface d'accumulateur de consigne se situe entre environ 25 degrés Celsius et environ 55 degrés Celsius, de préférence entre environ 38 degrés Celsius et environ 45 degrés Celsius et/ou dans lequel la température de cellule d'accumulateur de consigne se situe entre environ 40 degrés Celsius et environ 45 degrés Celsius, de préférence entre environ 42 degrés Celsius et environ 43 degrés Celsius.

12. Système selon l'une quelconque des revendications précédentes, dans lequel l'accumulateur (32) est couplé ou peut être couplé à ladite au moins une interface d'accumulateur du dispositif de charge (10) de telle manière que le flux volumique d'air thermorégulé (24) atteigne au moins approximativement perpendiculairement la surface extérieure de l'accumulateur (32).

13. Système selon l'une quelconque des revendications précédentes, dans lequel l'accumulateur (32) est couplé ou peut être couplé à ladite au moins une interface d'accumulateur du dispositif de charge (10) de telle manière que le flux volumique d'air thermorégulé (24) atteigne selon au moins un angle ou de manière inclinée la surface extérieure de l'accumulateur (32).

14. Système selon l'une quelconque des revendications précédentes, dans lequel la surface extérieure de l'accumulateur (32) est formée au moins par zones par un élément échangeur de chaleur (40).

15. Système selon au moins l'une des revendications précédentes, dans lequel le boîtier de dispositif de charge (12) est réalisé au moins approximativement en forme de U ou de V.

16. Procédé de thermorégulation d'un accumulateur (32) dans un système (50) formé par l'accumulateur (32) et un dispositif de charge (10) selon au moins l'une des revendications précédentes, dans lequel le procédé est mis en œuvre dans le temps avant ou pendant la charge et comprend au moins les étapes suivantes :
- détection par capteur d'une température de surface d'accumulateur réelle et/ou d'une température de cellule d'accumulateur réelle par un dispositif de détection du dispositif de charge (10) et/ou de l'accumulateur (32),
- comparaison de la température de surface d'accumulateur réelle et/ou de la température de cellule d'accumulateur réelle détectée à une température de surface d'accumulateur de consigne et/ou à une température de cellule d'accumulateur de consigne par un dispositif de commande et/ou de régulation (S) du dispositif de charge (10), qui est en liaison ou qui communique avec ledit au moins un dispositif de détection,
- production et thermorégulation d'un flux volumique d'air (24) à une température définie en tenant compte de la comparaison consigne/réel de la température de surface d'accumulateur et/ou de la température de cellule d'accumulateur par un dispositif de ventilation (18) disposé à l'intérieur d'un boîtier de dispositif de charge (12) et par au moins un élément de thermorégulation (28) monté en aval du dispositif de ventilation (18) dans le sens de l'écoulement, dans lequel le boîtier de dispositif de charge (12) comporte au moins une ou plusieurs ouvertures d'entrée d'air (31) par l'intermédiaire desquelles le dispositif de ventilation (18) est relié, en particulier par voie fluidique, à l'environnement, et dans lequel le boîtier de dispositif de charge (12) comprend au moins une ou plusieurs ouvertures de sortie d'air (22) par l'intermédiaire desquelles le flux volumique d'air produit par le dispositif de ventilation (18) sort du boîtier de dispositif de charge (12) afin de ventiler l'accumulateur (32) avec le flux volumique d'air thermorégulé (24),
- ventilation de l'accumulateur (32) avec le flux volumique d'air thermorégulé (24), de telle manière qu'une température de surface d'accumulateur de consigne et/ou qu'une température de cellule d'accumulateur de consigne soit atteinte, dans lequel le flux volumique d'air thermorégulé (24) est dirigé vers l'accumulateur (32) de telle manière que sa surface extérieure soit enveloppée par le flux volumique d'air thermorégulé (24).

17. Procédé selon la revendication 16, dans lequel, lorsque la température de surface d'accumulateur de consigne et/ou la température de cellule d'accumulateur de consigne est atteinte, la thermorégulation du flux volumique d'air est interrompue ou réduite, ou le dispositif de ventilation (18) ou l'élément de thermorégulation (28) est arrêté.

18. Procédé selon la revendication 16 ou la revendication 17, dans lequel le flux volumique d'air est thermorégulé à une température définie comprise entre environ 30 degrés Celsius et environ 75 degrés Celsius lorsque la température de surface d'accumulateur de consigne et/ou la température de cellule d'accumulateur de consigne n'est pas atteinte pour chauffer l'accumulateur (32) à une température de surface d'accumulateur de consigne et/ou à une température de cellule d'accumulateur de consigne.

19. Procédé selon la revendication 16 ou la revendication 17, dans lequel le flux volumique d'air est thermorégulé à une température définie comprise entre environ 0 degré Celsius et environ 29 degrés Celsius lorsque la température de surface d'accumulateur de consigne et/ou de la température de cellule d'accumulateur de consigne est dépassée pour refroidir l'accumulateur (32) à une température de surface d'accumulateur de consigne et/ou à une température de cellule d'accumulateur de consigne.
